(19) Europäisches Patentamt
European Patent Office
Office européen des brevets

(11) Numéro de publication: **0 197 845 B1**

(12) # FASCICULE DE BREVET EUROPEEN

(45) Date de publication du fascicule du brevet: **18.01.89**

(51) Int. Cl.⁴: **C 09 J 5/06**, F 16 B 11/00

(21) Numéro de dépôt: **86400659.8**

(22) Date de dépôt: **27.03.86**

(54) **Procédé d'assemblage de surfaces par application d'un joint en polyuréthane ou en polyétheramide, fusion superficielle de ce joint et refroidissement.**

(30) Priorité: **29.03.85 FR 8504740**

(43) Date de publication de la demande: **15.10.86 Bulletin 86/42**

(45) Mention de la délivrance du brevet: **18.01.89 Bulletin 89/3**

(84) Etats contractants désignés: **AT BE CH DE FR GB IT LI LU NL SE**

(56) Documents cités:
**EP-A- 0 081 426**
**FR-A- 2 321 582**
**FR-A- 2 534 244**
**GB-A- 2 090 607**

(73) Titulaire: **ATOCHEM, 4 & 8, Cours Michelet La Défense 10, F-92800 Puteaux (FR)**

(72) Inventeur: **Boutillier, Jacques, Carsix, F-27300 Bernay (FR)**
Inventeur: **Dehay, Georges, Bois du Chene Gilsolles, F-27190 Conches en Ouche (FR)**
Inventeur: **Forichon, Noelle, Residence Clairval Chemin de la Planquette, F-27300 Bernay (FR)**
Inventeur: **Leroux, Roland, 13, Rue du Coteau, F-92370 Chaville (FR)**

(74) Mandataire: **Rochet, Michel et al, ATOCHEM Département Propriété Industrielle La Défense 10 4 & 8 Cours Michelet, F-92800 Puteaux (FR)**

EP 0 197 845 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

Le procédé qui fait l'objet de la présente invention intéresse l'industrie des objets ou des structures réalisées par assemblage, au moyen de joints, d'éléments de matériaux divers.

Ces objets et ces structures peuvent être, par exemple

- des châssis de fenêtres constitués de cadres métalliques et de vitres qui viennent s'y insérer,
- des serres agricoles constituées d'une armature métallique et de panneaux transparents en verre ou en matière plastique,
- des vitrages isolants constitués de deux vitres réunies par des joints qui les maintiennent parallèles à elles-mêmes,
- des carrosseries de voitures constituées de tôles, métalliques ou en matériaux composites, dans lesquelles viennent s'insérer des pare-brises ou des vitrages, etc...

La réalisation de tels objets et structures exige des manipulations nombreuses et variées:

- le joint des châssis de fenêtres est constitué de mastic qu'il faut appliquer à la main;
- quand il s'agit de pare-brises ou de vitrages de voitures, il faut les munir de joints, ce qui est réalisé:

soit, par montage à la main quand ces joints sont en caoutchouc,

soit, par surmoulage par injection quand ils sont en polychlorure de vinyle (brevet U.S. n° 4 072 340) ce qui oblige à enduire préalablement la surface vitrée d'un primaire,

soit, par moulage par injection-réaction quand ils sont en polyuréthanes issus de la réaction de deux liquides (démande de brevet France n° 8 405 097), mais, dans tous les cas, il faudra les mettre en place dans la carrosserie après avoir enduit ces joints de colle, sans perdre de vue que, très souvent, il faudra procéder à un traitement spécial des surfaces du vitrage et de la carrosserie qui seront en contact avec la colle.

Le document FR-A-2 321 582 décrit un procédé d'assemblage de fenêtre automobile présentant une repliure à l'aide d'un joint étanche de type élastomère à chaud.

La présente invention se propose de simplifier ces opérations d'assemblage et, par suite, d'en réduire le coût.

Le procédé que nous revendiquons consiste à assembler par jointurage deux surfaces en matières diverses en pratiquant les opérations suivantes:

a) sur une des surfaces que nous appellerons A, on applique un joint ayant la forme d'un ruban en matière thermoplastique, soit, d'un polyuréthane thermoplastique, soit, d'un polyétheramide, soit du mélange de ces deux matières thermoplastiques,

b) la surface A, munie de son joint, est mise en regard de l'autre surface avec laquelle elle doit être assemblée, surface que nous appellerons B,

c) on fond superficiellement le joint à l'endroit où il est en regard de la surface B, l'applique contre B et laisse refroidir sous légère pression.

Les «surfaces» peuvent être de formes et de natures très variées: ce peuvent être des plaques, planes ou galbées, de verre, ordinaire ou trempé, feuilleté, durci, émaillé, métallisé... des plaques de polycarbonate, de polyméthacrylate de méthyle, des panneaux de bois ou de contre plaqué, des tôles d'aluminium traitées ou non, d'acier, de tôle galvanisée ou non, etc...

Pour des raisons de simplification, nous avons appelé «A» la surface qui reçoit le joint et «B» celle qui va être assemblée avec A mais cela ne veut pas dire que l'invention ne s'applique qu'à des assemblages de surfaces de matières différentes; on assemblera des plaques de tôle avec des plaques de tôle et des plaques de polycarbonate avec des plaques de polycarbonate, etc...

Par le terme «polyuréthane», nous entendons tous les polyuréthanes thermoplastiques, susceptibles d'être injectés ou extrudés; conviennent plus particulièrement pour la mise en oeuvre de l'invention, du fait de leur facilité de mise en oeuvre, de leurs propriétés élastomériques et de leur adhérence sur de nombreuses surfaces, les polyuréthanes revendiqués par le brevet belge n° 743 047, résultant de la réaction des composés suivants:

(a) une polycaprolactone de poids moléculaire compris entre environ 500 et environ 2000 et répondant à la structure suivante:

$$HOCH_2(CH_2)_4COO-[CH_2(CH_2)_4COO]_n-CH_2(CH_2)_4COO-R-OH$$

dans laquelle n est un nombre entier compris entre environ 2 et environ 15 et R est une chaîne hydrocarbonée aliphatique ayant jusqu'à 8 atomes de carbone; (b) un alpha, oméga-alkylène-glycol de 2 à 6 atomes de carbone et (c) du 4,4'-diphénylméthane diisocyanate ou du 4,4'-dicyclohexylméthane diisocyanate, le rapport entre les équivalents des groupes NCO et les équivalents des groupes hydroxyles étant pratiquement égal à 1.

Par le terme «polyétheramide», nous entendons aussi bien les polyétheramides statistiques (c'est-à-dire formés par l'enchaînement aléatoire des divers constituants monomères) que les polyétheramides séquencés, c'est-à-dire formés de blocs présentant une certaine longueur de chaîne de leurs divers constituants.

Les polyétheramides séquencés résultent de la copolycondensation de séquences polyamides à extrémités réactives avec des séquences polyéthers à extrémités réactives, telles que, entre autres:

1.) Séquences polyamides à bouts de chaînes diamines avec des séquences polyoxyalkyènes à bouts de chaînes dicarboxyliques;

2.) Séquences polyamides à bouts de chaînes dicarboxyliques avec des séquences polyoxyalkyènes à bouts de chaînes diamines obtenues par cyanoéthylation et hydrogénation de polyétherdiols;

3.) Séquences polyamides à bouts de chaînes dicarboxyliques avec des séquences polyoxyalkylènes alpha-oméga-dihydroxylées aliphatiques ou polyétherdiols, les polyétheramides obtenus étant, dans ce cas particulier, des polyétheresteramides.

La composition et la fabrication de tels polyétheresteramides séquencés ont été décrites dans les brevets français FR 2 273 021 et FR 2 401 947 au nom de la demanderesse.

Conviennent particulièrement bien pour la mise en oeuvre de la présente invention les polyétheresteramides séquencés, obtenus par polycondensation de séquences polyamides 11 ou 12 dicarboxyliques de poids moléculaire compris entre 300 et 15000, avec des séquences de polyoxytétraméthylène glycol de poids moléculaire compris entre 100 et 6000, à raison de 95 à 15% en poids de séquences polyamides pour 5 à 85% en poids de polyoxytétraméthylène glycol.

Ces polyétheramides et polyuréthanes peuvent être additionnés d'un ou plusieurs composés tels que:
– paraffine 50-52 de la Société Française TOTAL
– cires de polyéthylène vendues par la Société Américaine ALLIED sous la dénomination commerciale A-C 8 ou A-C 629
– ester de celophane vendu par la Société HERCULES sous la dénomination FORAL (R) 85
– résines terpène-phénol telle que, par exemple, le DERTOPHENE T (R) de la Société DRT ou le NIREZ V-2150 (R) de la Société REICHHOLD
– résines de pétrole alkyl-aromatiques telles, par exemple, que l'HERCURES AR 100 (R) de HERCULES
– copolymères éthylène-acétate de vinyle tels, par exemple, que l'ELVAX 220 (R) de la Société du PONT de NEMOURS
– des résines tackifiantes dérivées de la colophane, dimérisée et estérifiée à la pentaérythrite, comme par exemple, la DERTOPOLINE MDP (R) vendue par la Société DRT
– des élastomères triséquencés, à base de styrène et d'isoprène ou de butadiène, vendus par la Société SHELL sous la dénomination CARIFLEX (R)
– les élastomères obtenus par copolymérisation de l'isobutylène avec un peu d'isoprène et vendus par la Société ESSO sou la dénomination ESSO BUTYL (R), ou ceux obtenus par polymérisation de l'isobutylène et vendus par cette même Société sous le nom de VISTANEX (R).

Certaines de ces compositions ont déjà été décrites dans la demande de brevet au nom de la demanderesse FR 2 497 518.

Ces polyuréthanes, polyétheramides ou leurs mélanges peuvent également être additionnés de 0,5 à 5% en poids d'agents de couplage qui permettront, dans certains cas, d'améliorer leur adhésion sur les surfaces A et B; citons plus particulièrement les agents de couplage du type silane tels que:
le gamma-chloropropyl-méthoxysilane, le vinyl-trichlorosilane, le vinyl-triéthoxysilane, le vinyl-tris-(bêta-méthoxyéthoxy)-silane, le gamma-méthacryloxypropyl-triméthoxysilane, le bêta-(3,4-époxy-cyclohexyl)éthyl-triméthoxysilane, le gamma-glycidoxypropyl-triméthoxysilane, le vinyl-triacétoxysilane, le gamma-mercaptopropyltriméthoxysilane, le gamma-aminopropyl-triéthoxysilane, le N-bêta-(aminoéthyl)-gamma-aminopropyl-triméthoxysilane et les composés similaires.

Ils peuvent être également additionnés de charges minérales ou organiques de manière à améliorer certaines propriétés du joint telles que résistance au vieillissement, au fluage etc...; entre autres charges, citons le talc, la craie, l'oxyde de titane, l'argile, la silice, la poudre d'aluminium, les fibres d'amiante, le noir de carbone, etc...

Le joint, constitué des compositions thermoplastiques décrites ci-dessus, peut-être appliqué sur la surface A par différentes méthodes.

On peut, par exemple, déposer sur A un cordon de joint fondu, obtenu par extrusion de la composition thermoplastique à travers une filière.

L'extrudeuse sera, par exemple, fixe et située au-dessus de A – la surface A sera mobile et guidée par un système robotisé de telle sorte que le joint se déposera à l'état fondu de manière continue, par exemple, sur toute la périphérie où il ne tardera pas à se solidifier.

Cette manière de procéder convient pour déposer le joint représenté sur la figure 1 – également pour déposer le joint de la figure 2, appliqué sur la tranche de A.

Le joint peut également être appliqué par la technique du surmoulage, la surface A étant positionnée de manière convenable dans le moule d'une presse à injection alimentée avec la composition thermoplastique.

Cette technique convient particulièrement bien pour appliquer des joints sur la tranche de A avec un seul débordement (figure 4) ou deux débordements (figure 3).

Dans certains cas, on pourra utiliser la technique de surmoulage de joints décrite dans la demande de brevet France n° 8 308 903.

La surface A, munie de son joint refroidi, peut être manipulée et transportée sans difficultés; elle est alors positionnée de manière convenable par rapport à la surface B suivant que l'on veut obtenir un assemblage par recouvrement (figure 1) ou bout à bout (figures 2 et 5).

L'assemblage définitif est alors réalisé en fondant superficiellement le joint à l'endroit qui assurera la liason avec B, appliquant A contre B et laissant refroidir sous légère pression, cette fusion étant réalisée, par exemple, par un miroir chauffant.

On peut également appliquer A contre B et ne fondre le joint superficiellement que lorsqu'il y a contact, par le joint, de A avec B.

Après fusion et refroidissement, l'épaisseur du joint n'a que très peu varié – c'est-à-dire que, suivant les applications, elle reste comprise entre 2 et 20 mm.

Les compositions adhésives de la présente invention ne doivent pas déborder lorsqu'on les extrude ou injecte sur la surface A; le joint ne doit pas non plus couler lorsqu'on le fond superficiellement.

Cette consistance à l'état fondu dépendra du poids moléculaire du polyétheramide et du polyuréthane utilisé, de la nature et des quantités des additifs et charges incorporés.

Pour nous guider dans nos essais de réglage, nous avons utilisé le test de «coulure» suivant:

sur une plaque de verre, préalablement dégraissée, on extrude à l'état fondu du cordon d'environ 8 mm de diamètre de la composition thermoplastique étudiée.

Après refroidissement, la plaque est placé verticalement pendant une demi-heure dans une étuve réglée à 145°C (voir figure 6).

Après refroidissement, la hauteur de coulure du cordon, h, est mesurée. Dans les exemples 1 et 2

ci-dessous, l'expérience a montré qu'il fallait que h soit inférieur à 50 mm.

Les exemples qui suivent ont pour but d'illustrer l'invention.

*EXEMPLE 1*

*Assemblage d'un vitrage latéral sur une carrosserie de voiture*

Ce vitrage latéral est constitué d'un triangle en verre trempé de 4 mm d'épaisseur dont les côtés de l'angle droit ont respectivement 250 et 420 mm et l'hypothénuse 470 mm, les deux extrémités de l'hypothénuse étant arrondies.

Ce vitrage est alors surmoulé sur toute sa périphérie d'un joint d'ébordant ayant la forme représentée sur la figure 4, de 8 mm d'épaisseur sur la tranche et de 4 mm sur la partie débordante.

Pour ce faire, il a été placé dans le moule d'une presse à injection, en appui sur des broches métalliques, placées de part et d'autre, éclipsables sous la pression d'injection et permettant le complet remplissage du joint à l'emplacement des broches.

La presse utilisée permet de venir fermer le moule, en réglant l'entrefer entre les deux parties de ce moule.

L'ensemble hydraulique fermeture-ouverture est positionné à 90° par rapport à l'ensemble vis-fourreau de plastification (voir figures 7 et 8).

La trémie de la presse à injection est alimentée en granulés d'une composition thermoplastique qui a été réalisée de la manière suivante:

Les composés suivants ont été mélangés à sec, à la température ordinaire:

– 50 kgs de granulés de polyétheresteramide séquencé [obtenu par la polycondensation de 30 parties d'une séquence de polyamide 12 dicarboxylique, de masse moléculaire en nombre de 850, obtenue à partir de lauryllactame et d'acide adipique, avec 70 parties d'une séquence de polyoxytétraméthylène glycol de masse moléculaire 2000, polycondensation poursuivie jusqu'à viscosité inhérente (mesurée à 25°C sur une solution de 0,5 g dans 100 g de m-crésol) égale à 1,80]

– 50 kgs de résine terpène-phénolique NIREZ V-2150 de la Société REICHHOLD

– 20 kgs de talc 20 M 00S de la Société TALCS de LUZENAC

– 5 kgs de noir de carbone ELFTEX 430 (R) de la Société CABOT,

– 1 kg de gamma-glycidoxypropyl triméthoxysilane A 187 de la Société UNION CARBIDE.

Le mélange de ces cinq constituants sert à alimenter une extrudeuse double vis WERNER et PFLEIDERER, reglée à la température de 200°C et munie d'une filière multitrons. Il en sort des joncs que l'on refroidit à l'eau, coupe en granulés et sèche.

On injecte par le plan du joint du moule en position fermée (voir figure 7) la composition thermoplastique portée à la température de 200°C, en quantité suffisante pour remplir l'espace du joint à surmouler sur le vitrage.

Les autres conditions de moulage sont les suivantes:

– température du moule maintenue à 14°C par circulation d'eau
– vitesse d'injection: lente
– vitesse de rotation de vis: 120 tours/minute
– pression d'injection: nulle
– durée d'injection: 25 secondes
– durée de refroidissement: 10 secondes.

Le moule est ensuite ouvert (voir figure 8) et le vitrage muni de son joint, transporté sous une lampe infra-rouge, épousant la forme du joint, à une distance telle et pendant un temps tel que le joint fonde sur 1 mm d'épaisseur.

Avant qu'il n'ait eu le temps de se refroidir, il est appliqué contre la baie d'une carrosserie de voiture automobile, en tôle peinte, où il vient se loger suivant la schéma de la figure 5; on l'y maintient sous légère pression jusqu'à refroidissement, ce qui ne demande que quelques secondes.

Certaines caractéristiques physiques ou mécaniques du joint obtenu sont rassemblées dans le tableau ci-après.

*EXEMPLE 2*

On opère comme dans l'exemple 1 à la différence près que l'on surmoule sur le vitrage latéral un joint en un polyuréthane vendu par la Société K.J. QUINN and Co sous l'appellation PN03, à base de 4,4'-dicyclohexylméthane diisocyanate, d'un alpha, oméga-alkylène-glycol et d'une polycaprolactone.

Le vitrage latéral muni de son joint fondu superficiellement vient se loger dans l'emplacement de la même carrosserie en tôle peinte.

De même que dans l'exemple 1, les opérations ont été très simples puisque le vitrage n'a reçu aucun traitement de surface pas plus que la carrosserie et qu'aucune colle n'a été appliquée sur le joint.

Les caractéristiques du joint sont rassemblées dans le tableau ci-dessous.

En dehors des bonnes caractéristiques mécaniques indiquées dans ce tableau, signalons que ces joints ont une bonne résistance à la corrosion même à 140°C; l'assemblage reste rigide, même en cas de chocs, et absorbe bien les vibrations.

| Caractéristique mesurée sur le joint | | Méthode utilisée | Exemple 1 | Exemple 1 |
|---|---|---|---|---|
| Viscosité à l'état fondu a 200°C, en Pa.s | | au Rhéomètre capillaire INSTRON | 1.700 | 200 |
| Point de ramollissement Bille/Anneau, en °C | | norme ASTM E 28 | 160 | 150 |
| VICAT, en °C | | ASTM D1525 | 55 | 59 |
| Dureté SHORE | A | ASTM 1484 | 82 | 90 |
| | B | | 20 | 35 |
| Allongement à la rupture, en % | | ASTM D 638 | 335 | 320 |
| Contrainte à la rupture, en $N/mm^2$ | | | 13 | 44 |
| Résistance au cisaillement de la liaison vitrage/tôle, en da $N/cm^2$ | | ISO 4587 | | |
| à 20°C | | | 80 | 130 |
| à 80°C | | | 11 | 19 |

**Revendications**

1. Procédé d'assemblage par jointurage de deux surfaces, A et B, ces surfaces étant en matière diverses telles que verre, matières plastiques, métal caractérisé en ce qu'il consiste à:

a) appliquer sur la surface A un joint, ayant la forme d'un ruban en matière thermoplastique, à base d'un polymère choisi dans le groupe comprenant les polyuréthanes thermoplastiques, les polyétheramides ou les mélanges de ces deux polymères thermoplastiques,

b) mettre en regard, par son joint, la surface A avec la surface B,

c) réaliser l'assemblage par fusion de la couche superficielle du joint qui est en regard de la surface B, mise en contact et refroidissement sous légère pression.

2. Procédé selon 1 caractérisé en ce que les polyuréthanes thermoplastiques résultent de la réaction entre eux des composés suivants:

(a) une polycaprolactone de poids moléculaire compris entre environ 500 et environ 2000 et répondant à la structure suivante:

$$HOCH_2(CH_2)_4COO-[CH_2(CH_2)_4COO]_n-CH_2(CH_2)_4COO\text{-}R\text{-}OH$$

dans laquelle n est un nombre entier compris entre environ 2 et environ 15 et R est une chaîne hydrocarbonée aliphatique ayant jusqu'à 8 atomes de carbone; (b) un alpha, oméga-alkylène-glycol de 2 à 6 atomes de carbone et (c) du 4,4'-diphénylméthane diisocyanate ou du 4,4'-dicyclohexylméthane diisocyanate, le rapport entre les équivalents des groupes NCO et les équivalents des groupes hydroxyles étant pratiquement égal à 1.

3. Procédé selon 1 caractérisé en ce que les polyétheramides sont des polyétheresteramides obtenus par polycondensation de séquences polyamides alpha-oméga dicarboxyliques avec des séquences polyoxyalkylènes alpha-oméga-dihydroxylées aliphatiques.

4. Procédé selon 3 caractérisé en ce que les polyétheresteramides sont obtenus par polycondensation de séquences polyamides 11 ou 12 dicarboxyliques de poids moléculaire compris entre 300 et 15000 avec des séquences de polyoxytétraméthylène glycol de poids moléculaire compris entre 100 et 6000 à raison de 95 à 15% en poids de séquences polyamides pour 5 à 85% en poids de polyoxytétraméthylène glycol.

5. Procédé selon l'une quelconque des revendications 1 à 4, caractérisé en ce que les polyuréthanes, les polyétheramides ou leurs mélanges sont additionnés d'un ou plusieurs composés choisis dans le groupe constitué par les résines tackifiantes, le talc, le noir de carbone et les silanes.

6. Procédé selon l'une quelconque des revendications 1 à 5, caractérisé en ce que le joint est appliqué sur la surface A par surmoulage par injection.

7. Procédé selon l'une quelconque des revendications 1 à 5, caractérisé en ce que le joint est appliqué sur la surface A par extrusion.

8. Procédé selon l'une quelconque des revendications 1 à 7, caractérisé en ce que la fusion de la couche superficielle du joint de la surface A est pratiquée avant que ce joint soit en contact avec la surface B.

9. Procédé selon l'une quelconque des revendications 1 à 7, caractérisé en ce que la fusion de la couche superficielle du joint de la surface A est pratiquée quand ce joint est en contact avec la surface B.

10. Assemblages selon le procédé 1 à 9 de pare-brises ou de vitrages fixes, en verre ou en matière plastique, sur des carrosseries de voitures.

**Patentansprüche**

1. Verfahren zum Zusammenfügen zweier Oberflächen A und B durch deren Klebeverbindung, wobei diese Oberflächen aus unterschiedlichem Material wie Glas, Kunststoffen oder Metall bestehen, dadurch gekennzeichnet, dass es besteht aus dem:

a) Aufbringen einer Verbindungsnaht auf die Oberfläche A, die die Form eines Bandes (Streifens) aus thermoplastischem Material hat, auf Basis eines Polymeren ausgewählt aus der Gruppe umfassend die thermoplastischen Polyurethane, die Polyetheramide oder die Gemische dieser beiden thermoplastischen Polymeren

b) in gegenüberstehende Position bringen der Verbindungsnaht der Oberfläche A und der Oberfläche B

c) Bewirken des Zusammenfügens durch Schmelzen der Oberflächenschicht der Verbindungsnaht, die der mit dieser in Kontakt gebrachten Oberfläche B gegenüberliegt und Abkühlen unter leichtem Andrücken.

2. Verfahren nach Anspruch 1, dadurch gekennzeichnet, dass die thermoplastichen Polyurethane aus der Reaktion der nachfolgend genannten Verbindungen miteinander hervorgehen:

(a) eines Polycaprolactons mit Molekulargewicht zwischen ungefähr 500 und ungefähr 2000, das der nachfolgenden Struktur entspricht:

$$HOCH_2(CH_2)_4COO-[CH_2(CH_2)_4COO]_n-CH_2(CH_2)_4COO\text{-}R\text{-}OH$$

in der n eine ganze Zahl von ungefähr 2 bis ungefähr 15 ist und R eine aliphatische Kohlenwasserstoffkette mit bis zu 8 Kohlenstoffatomen ist; (b) eines alpha-, omega-Alkylenglykols mit 2 bis 6 Kohlenstoffatomen und (c) eines 4,4'-Diphenylmethandiisocyanats oder eines 4,4-Dicyclohexylmethandiisocyanats, wobei das Verhältnis zwischen den Äquivalenten der Reste NCO und den Äquivalenten der Hydroxylgruppen praktisch gleich 1 ist.

3. Verfahren nach Anspruch 1, dadurch gekennzeichnet, dass die Polyetheramide, Polyetheresteramide sind, die erhältlich sind durch Polykondensation von alpha-omega-Dicarbonsäurepolyamidsequenzen mit aliphatischen alpha-omega-dihydroxylierten Polyoxyalkylensequenzen.

4. Verfahren nach Anspruch 3, dadurch gekennzeichnet, dass die Polyetheresteramide erhältlich sind durch Polykondensation von Dicarbonsäure-polyamid-11- oder -12-Baueinheiten mit einem Molekulargewicht zwischen 300 und 15000 mit Polyoxytetramethylenglykolbaueinheiten mit einem Molekulargewicht zwischen 100 und 6000, die bis 15 Gew.-% Polyamidbaueinheiten auf 5 bis 85 Gew.-% Polyoxytetramethylenglykol aufweisen.

5. Verfahren nach einem der Ansprüche 1 bis 4, dadurch gekennzeichnet, dass den Polyurethanen, den Polyetheramiden oder deren Gemischen ein oder mehrere Verbindungen ausgewählt aus der Gruppe bestehend aus den Harzen mit Klebstoffeigenschaften, Talk, Kohle und den Silanen zugegeben werden.

6. Verfahren nach einem der Ansprüche 1 bis 5, dadurch gekennzeichnet, dass die Verbindungsnaht auf die Oberfläche A durch Aufspritzen aufgebracht wird.

7. Verfahren nach einem der Ansprüche 1 bis 5, dadurch gekennzeichnet, dass die Verbindungsnaht auf die Oberfläche A durch Extrudieren aufgebracht wird.

8. Verfahren nach einem der Ansprüche 1 bis 7, dadurch gekennzeichnet, dass das Schmelzen der Oberflächenschicht der Verbindungsnaht der Oberfläche A durchgeführt wird, bevor diese Verbindungsnaht mit der Oberfläche B in Kontakt ist.

9. Verfahren nach einem der Ansprüche 1 bis 7, dadurch gekennzeichnet, dass das Schmelzen der Oberflächenschicht der Verbindungsnaht der Oberfläche A durchgeführt wird, wenn diese Verbindungsnaht in Kontakt ist mit der Oberfläche B.

10. Einbau von Windschutzscheiben oder Fensterscheiben aus Glas oder Kunststoff gemäss dem Verfahren der Ansprüche 1 bis 9 bei Kraftfahrzeugkarosserien.

**Claims**

1. Process for assembling, by jointing, two surfaces A and B, these surfaces being made of various materials such als glass, plastics, metal etc., characterized in that it consists in:

a) applying to the surface A a seal in the shape of a strip of a thermoplastic material, based on a polymer chosen from the group comprising thermoplastic polyurethanes, polyetheramides or mixtures of both these thermoplastic polymers,

b) placing the surface A so as to face the surface B, via its seal, and

c) producing the assembly by melting the surface layer of the seal which is facing the surfaces B, placing in contact and cooling under a slight pressure.

2. Process according to 1, characterized in that the thermoplastic polyurethanes are produced by the interaction of the following compounds

(a) a polycaprolactone with a molecular weight of between approximately 500 and approximately 2,000 and corresponding to the following structure:

$$HOCH_2(CH_2)_4COO-[CH_2(CH_2)_4COO]_n-CH_2(CH_2)_4COO-R-OH$$

in which n is an integer from approximately 2 to approximately 15 and R is an aliphatic hydrocarbon chain containing up to 8 carbon atoms; (b) an alpha, omega-alkylene glycol containing 2 to 6 carbon atoms and (c) of 4,4'-diphenylmethane diisocyanate or of 4,4'-dicyclohexylmethane diisocyanate, the ratio of the equivalents of the NCO groups to the equivalents of the hydroxyl groups being practically equal to 1.

3. Process according to 1, characterized in that the polyetheramides are polyetheresteramides produced by polycondensation of alpha,omega-dicarboxylic polyamide blocks with aliphatic alpha, omega-dihydroxylated polyoxyalkylene blocks.

4. Process according to 3, characterized in that the polyetheresteramides are produced by polycondensation of dicarboxylic nylon 11 or nylon 12 blocks with a molecular weight of between 300 and 15,000 with polyoxytetramethylene glycol blocks with a molecular weight of between 100 and 6,000, in a proportion of 95 to 15% by weight of polyamide blocks to 5 to 85% by weight of polyoxytetramethylene glycol.

5. Process according to any one of claims 1 to 4, characterized in that the polyurethanes, the polyetheramides or mixtures thereof contain, as additives, one or more compounds chosen from the group consisting of tackifying resins, talc, carbon black and silanes.

6. Process according to any one of claims 1 to 5, characterized in that the seal is applied to the surface A by injection overmoulding.

7. Process according to any one of claims 1 to 6, characterized in that the seal is applied to the surface A by extrusion.

8. Process according to any one of claims 1 to 7, characterized in that the melting of the surface layer of the seal on the surface A is carried out before this seal is in contact with the surface B.

9. Process according to any one of claims 1 to 7, characterized in that the melting of the surface layer of the seal on the surface A is carried out when this seal is in contact with the surface B.

10. Assemblies according to the process 1 to 9 of windscreens or of fixed glazing made of glass or of plastic, in car bodies.

Fig. 1

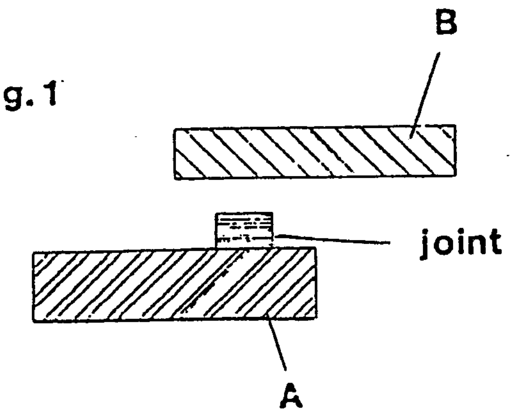


Fig. 2

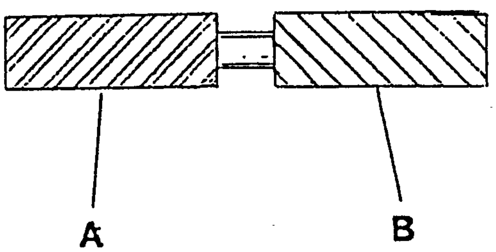


Fig. 3

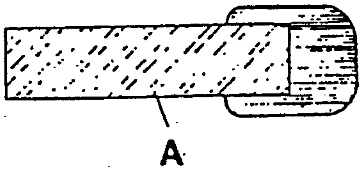


Fig. 4

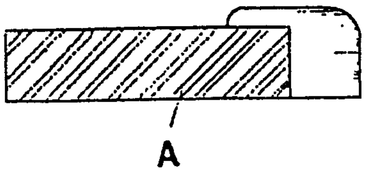

Fig.5

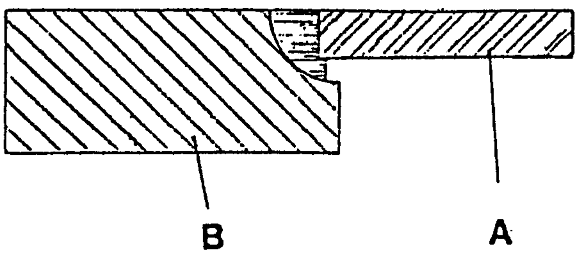


Fig.6

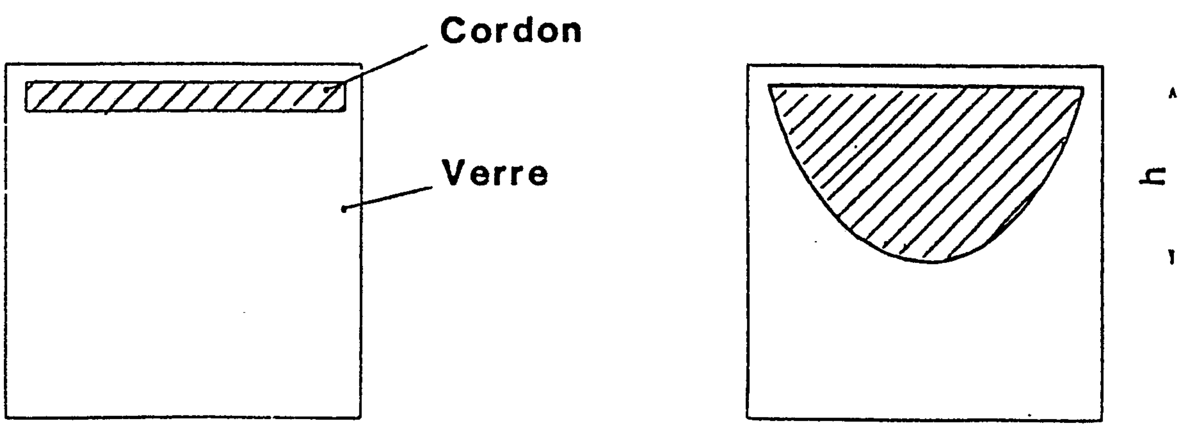


Avant

Après 1/2H. à 145° C

fig.7

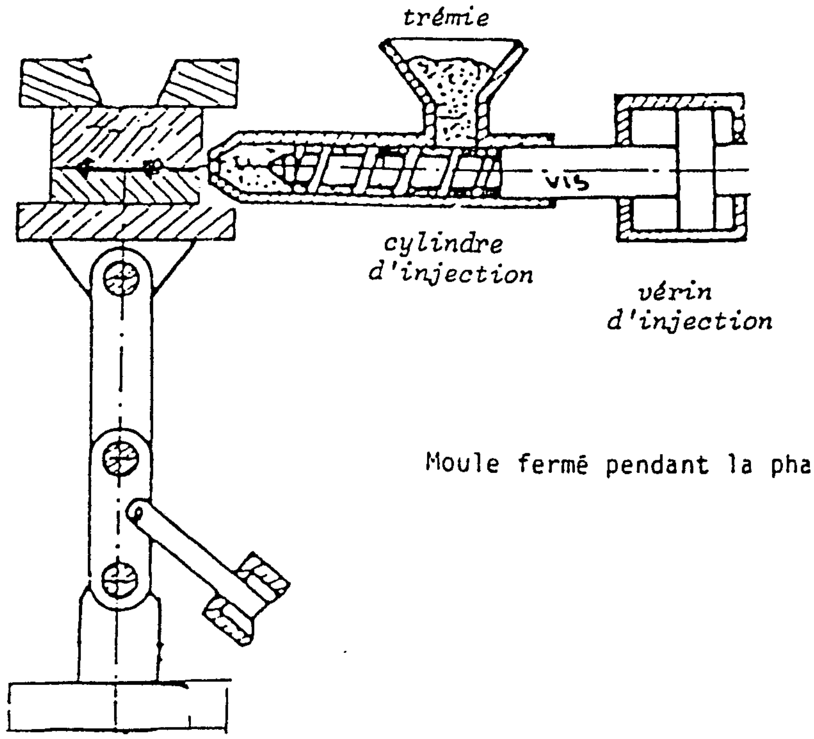


Moule fermé pendant la phase d'injection

fig.8

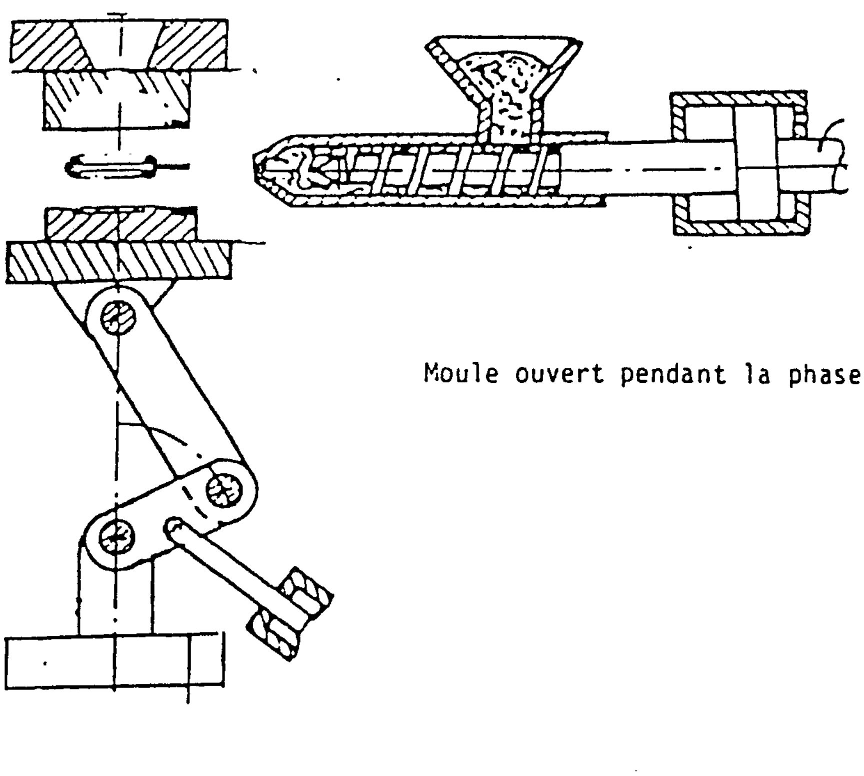

Moule ouvert pendant la phase d'éjection